# EUROPEAN PATENT APPLICATION

(11) **EP 2 546 805 A1**
(43) Date of publication of application: **16.01.2013**
(21) Application number: 11305906.7
(22) Date of filing: 12.07.2011
(51) Int. Cl.: G06T 11/60, G09G 5/00

(54) **A method, a system, a device, a computer program and a computer program product for virtually marking a physical environment**

(71) Applicant: Alcatel Lucent, 75007 Paris (FR)
(72) Inventor: Betge-Brezetz, Stéphane, 75015 Paris (FR); Piekarec, Sophie, 91940 Les Ulis (FR); Ghorbel, Mahmoud, 91480 Quincy Sous Sénart (FR)
(74) Representative: Kleinbub, Oliver

(57) **Abstract**

The invention concerns a method for virtually marking an image of a physical environment (101), wherein a mark for said physical environment (101) is determined from movement of a device (102) relative to a predetermined position of said physical environment (101), wherein a position for displaying said mark in said image of said physical environment (101) is determined from information about said predetermined position of said physical environment (101) and wherein said mark and said image of said physical environment (101) are displayed together.

## Description

### Field of the invention

The invention relates to a method, a system, a device, a computer program and a computer program product for virtually marking a physical environment.

### Background

Augmented reality systems are capable of adding information, e.g. tags, to pictures viewed trough a camera in real time using for example a smart phone.

The information that is added to the picture is currently determined for example after successful image recognition or location identification using GPS position automatically from a data base having stored the information that matches the recognized image. Bar codes like QR-codes that are put at some location may be used for location identification as well.

In another example the information is created from input of the user using knobs or by recognizing movements of a finger or pen on a touch sensitive pad or touch screen of the same device that is taking the picture.

### Summary

The physical environment of the invention is thus to improve the usability of virtual tags, referred to as mark below.

The main idea of the invention is a method for virtually marking a physical environment (e.g., virtually tagging a wall), wherein a mark for said physical environment is determined from movement of a device relative to a predetermined position of said physical environment, wherein a position for displaying said mark in said image of said physical environment is determined from information about said predetermined position of said physical environment and wherein said mark and said image of said physical environment are displayed together. This way the mark is created on a single device without modifying the physical environmentphysical environment marked itself.

Advantageously said position of said physical environment is determined depending on a position of said device and an image viewed by said device at said position of said device. This increases usability because by using augmented reality algorithms for recognizing the position of said physical environment the user needs no additional information about the physical environmentphysical environment to be virtually marked.

Advantageously a position of said mark on said physical environment is determined depending on said position of said physical environment and said movement of said device. This increases usability because the mark is placed automatically on the correct position of the image of the physical environment.

Advantageously an already completed part of said mark is displayed on a display of said device while determining said mark. The user can see what he drew immediately. This makes using the device much easier.

Advantageously an attribute, in particular specifying read or write access or a digital signature, is assigned to said mark. Attributes make the handling of the mark much easier, allowing access control or secure identification of an author of a mark.

Advantageously information about said mark is sent from a first device, in particular to a second device, in particular via a server of said telecommunications network. The virtual mark is shared this way amongst users, giving the users access to marks created by other users.

Advantageously a modification to said mark is determined from movement of said device. Interoperability is enhanced by allowing users to modify their marks or other users' marks as it can be optionally defined.

For virtually marking an image of a physical environment a system is used, wherein a first device is adapted to determine a mark for a physical environment from movement of said first device relative to a predetermined position of said physical environment, and to determine a position for displaying said mark in said image of said physical environment from information about said predetermined position of said physical environment, a server is adapted to grant access rights to information about said mark depending on an attribute, in particular specifying read or write access or a digital signature, assigned to said information about said mark and wherein said first device or a second device are adapted to display said mark and said physical environment together.

Further developments of the invention can be gathered from dependent claims and the following description.

### Brief description of the figures

In the following the invention will be explained further making reference to the attached drawings.
Fig. 1 schematically shows a first part of a system for virtually marking objects.
Fig. 2 schematically shows a second part of a system for virtually marking objects.
Fig. 3 schematically shows a first flow chart, showing some typical steps in a first method.
Fig. 4 schematically shows a second flow chart, showing some typical steps in a second method.

### Description of the embodiments

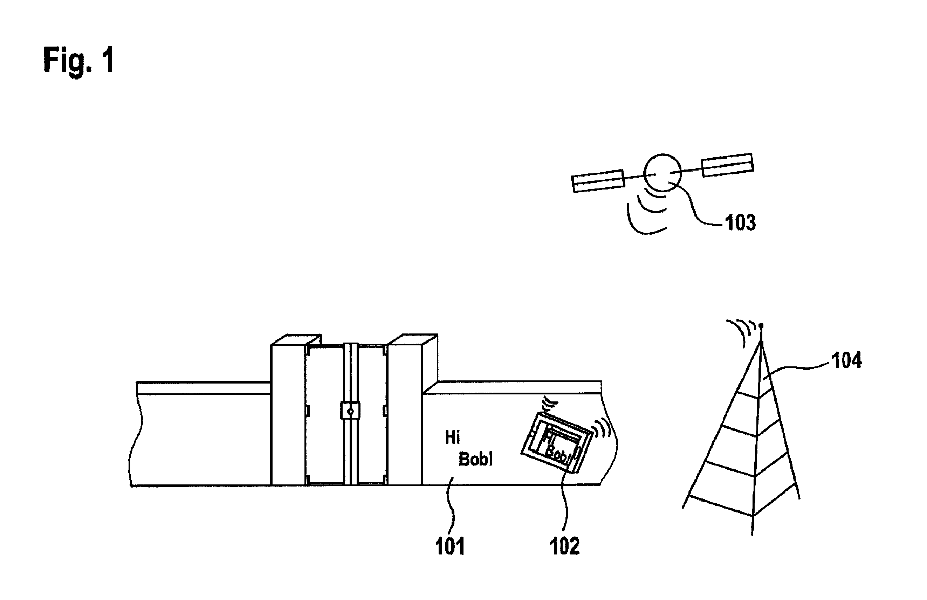

Fig. 1 schematically shows a first part of a system for virtually marking objects.

Said system comprises a first device, e.g. a first smart phone 102, a global positioning system satellite 103 (well known as GPS) and an antenna 104, e.g. a base station on a tower that operates according to the Long Term Evolution standard (well known as LTE). The invention is completely independent of the wireless network technology. Any wireless technology allowing data transfer can be used.

Said first device is adapted to receive information suitable to determine its position or orientation.. For example GPS information is received by said smart phone 102 from said satellite 103.

Alternatively any other position determination for example wireless triangulation may be used.

Said first device is adapted to determine its position or orientation from said information about said position or orientation. For example said GPS information is used to calculate said position.

Alternatively or additionally said first device may comprise additional sensors adapted to determine the orientation of said first device. Said first device for example comprises a pitch sensor or a compass and is adapted to determine horizontal and vertical orientation in space.

Said first device is adapted to display images. For example said smart phone 102 comprises a camera, a processor and a display that displays a physical environment, e.g. a wall 101, captured by said camera on said display when said camera is facing into the direction of said physical environment, e.g. said wall 101.

Said first device is adapted to determine a virtual mark on a physical environment. For example said first device, e.g. said first smart phone 102, comprises an acceleration sensor that determines movements of said first device, e.g. said first smart phone 102.

Furthermore said first device, e.g. said smart phone 102 is adapted to determine a virtual mark. A virtual mark may be set or combination of black or white or colored pixel of said display of a predetermined size or any combination of such pixels. According to the example the mark is a text "Hi Bob!" as depicted in figure 1.

Preferably said first device, e.g. said smart phone 102 is adapted to determine said virtual mark like a digital pen that captures and convert writings performed with said first device, e.g. said first smart phone 102.

Said first device may include a display and may be adapted to show parts of said virtual mark on said physical environment immediately while determining it, or said virtual mark entirely after creation is complete.

Said first device may be said first smart phone 102 or alternatively a dedicated device, like a digital pen with a built-in GPS sensor and sender.

Said first device comprises for example said camera for capturing images, said display for displaying images and said processor for running a software for viewing said physical environment and/or said mark.

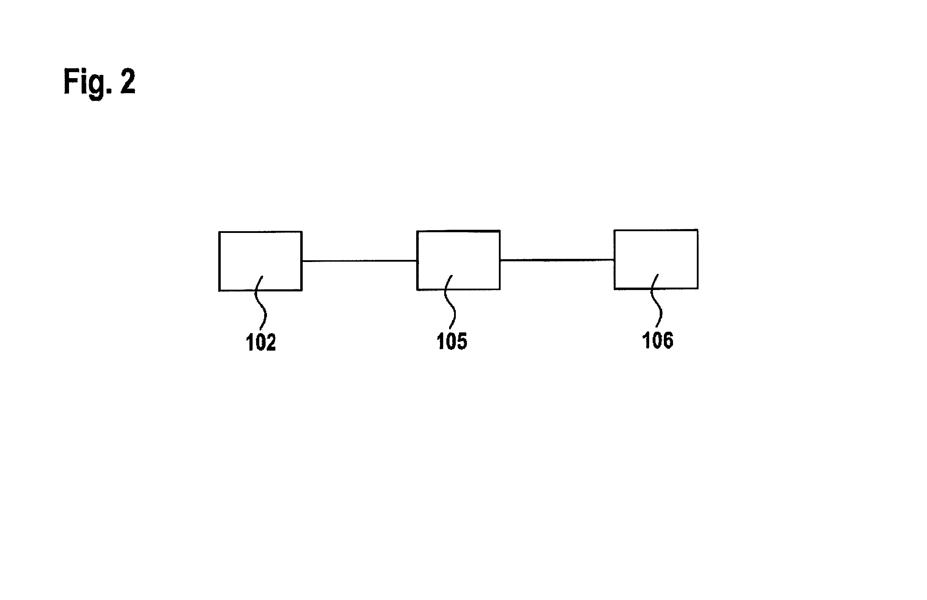

Fig. 2 schematically shows a second part of a system for virtually marking objects.

Said second part comprises of said first device, e.g. said first smart phone 102, a server 105 and a second device, e.g. a second smart phone 106.

Said second device has for example the same features as said first device. For example said second device is a second smart phone 106 with the same features as said first smart phone 102.

Additionally said first device, e.g. said first smart phone 102, said server 105 and said second device, e.g. said second smart phone 106, are adapted to communicate with each other. For example said smart phones 102, 106 is adapted to communicate with antenna 104 using a wireless mobile network like LTE.

Said devices and said server 105 are connected for example via local area network (LAN), wireless local area network (WLAN, 802.11n) or wide area network (WAN). Said connection is for example according to the well known internet protocol (IP), user datagram protocol (UDP), transmission control protocol (TCP) or stream control transmission protocol (SCTP). Signaling is for example according to the well known Simple Object Access Protocol (SOAP), Representational State Transfer (REST) or session initiation protocol (SIP) or Internet Protocol Multimedia Subsystem (IMS). Addressing may be done using the well known uniform resource locators (URL), uniform resource identifiers (URI).

The connection can but doesn't have to be directly between the devices or server 105.

Said server 105 may be a computer including a network interface adapted to connect to any of aforementioned networks, a processor and a storage, e.g. forming a database. Said server 105 may be adapted to interact with other servers, e.g. of Augmented Reality Systems.

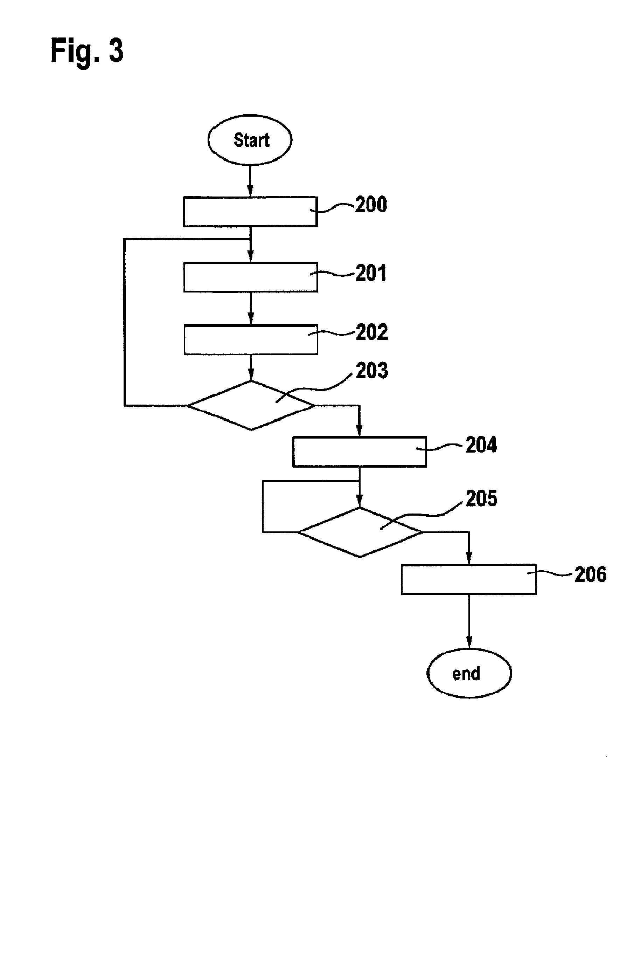

Goal of a first method is to create a virtual mark on a physical environment. Said first method is described below using said first smart phone 102 as example and making reference to figure 3. Said method is applicable to any other type of first device as well.

Said first method starts for example when a physical environment is displayed on said smart phone 102 after a user activates a virtual marking program on said first smart phone 102.

Afterwards a step 200 is executed.

In said step 200, said position of said smart phone 102 is determined, e.g. from GPS data received from said satellite 103. Additionally said position of said physical environment, e.g. said wall 101, is determined from said position of said smart phone 102 and said picture.

Afterwards a step 201 is executed.

In said step 201 movement of said smart phone 102 is tracked, e.g. by monitoring acceleration data from said acceleration sensor.

Afterwards a step 202 is executed.

In said step 202 a part of said virtual mark is determined from said tracked movement of said smart phone 102 and said position of said physical environment. Determining said virtual mark in this context comprises of determining the position of the mark on the image of the physical environment as well as the shape of the mark. Augmented Reality algorithms may be used for this purpose.

Optionally said part of said virtual mark may be displayed immediately, i.e. in real-time, on said display of said smart phone 102.

Said server 105 may comprise a database with a list of recipients and a list of marks. Furthermore said server 105 may comprise means, e.g. a computer program, to determine from the list of recipients and list of marks a mapping of marks to users that will be notified of the presence of a mark in his current environment.

Said smart phones 102 may comprise means, e.g. a computer program, for determining said mark. For example a handwriting editor computer program is executed on said smart phone 102 that is adapted to recognize a hand writing from movement of said smart phone 102. A not limiting list of exemplary movements of said smart phone 102 that are recognized by said handwriting editor as a predetermined action is given below:
Horizontal (shaking) movement = erase mark entirely or at least partially
Vertical (knocking) movement (Knocking = highlight mark at least partially

Any other movement = add at least one pixel, e.g. to a letter recognized by said handwriting editor.

Optionally said part of said virtual mark may be modified. For example the user may erase part of said mark, highlight parts of said mark, modify the font or perform other operation on the existing mark. Such modification may be initiated for example by moving shaking or knocking said smart phone 102.

Afterwards a step 203 is executed.

In said step 203 a test is performed to determine if a stop condition is met. For example said smart phone 102 comprises a button that if pressed triggers to stop tracking said movement of said smart phone 102. If said stop condition is met, a step 204 is executed. Otherwise said step 201 is executed.

In said step 204 a user prompt for input regarding attributes of said virtual mark is displayed. The attributes may include information about
- a recipient (e.g. address or name)
- access rights (e.g. read, write)
- digital signature of sender (e.g. PGP signature)
- time of validity of the virtual mark, or
- an identifier (e.g. creator name).

Said user may input said information for example via a touch screen of said mobile phone 102.

Said step 204 is optional and may be skipped or replaced by a automatic attribute setting step that for example uses predetermined attributes stored on said smart phone 102.

Afterwards a step 205 is executed.

In said step 205 a test is performed to determine if user input has been entered. In case user input is available, a step 206 is executed. Otherwise said step 205 is executed.

Optionally a time out condition is monitored to terminate said first method in case user input is not received within a certain time interval, e.g. 10 seconds.

In said step 206, information regarding said mark is sent. Said recipient is for example determined from said attributes, or said information is sent to said server 105. Optionally said attributes are sent as well.

Said information about said mark comprises for example
- said shape of said mark
- said position of said mark
- said attributes

Said step 206 is optional.

Afterwards said first method ends.

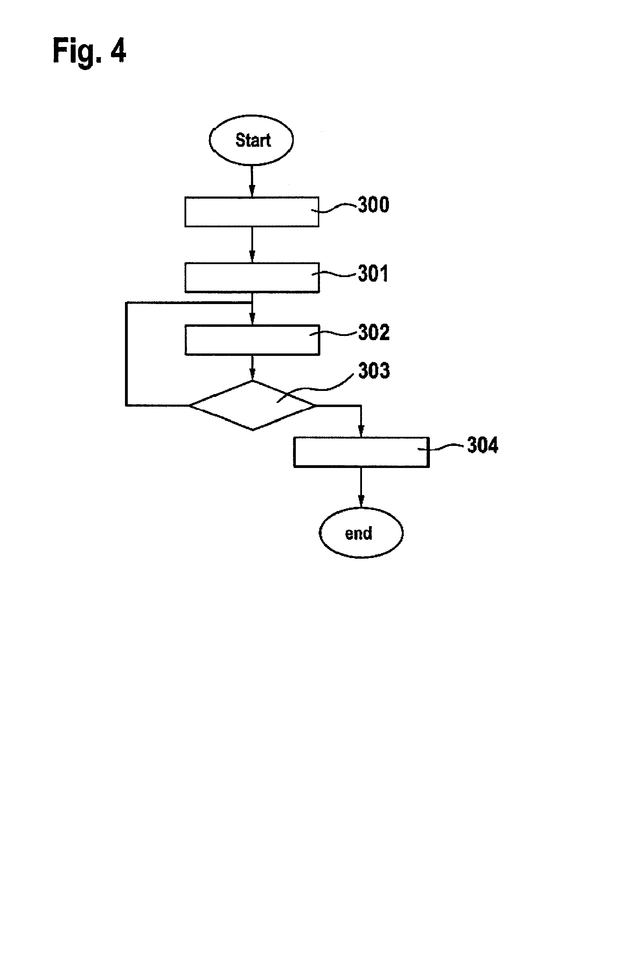

Goal of a second method is to display a virtual mark provided for a physical environment on a device close to said physical environment. Said second method is described below making reference to figure 4.

Said second method starts for example upon receipt of information about a virtual mark by said server 105.

Afterwards a step 300 is executed.

In said step 300, said server 105 determines which recipient shall receive said virtual mark. For example said attributes containing said address of said recipient are received with said information and said address is extracted from said attributes to determine the recipient.

The recipient in this case may be a single recipient or a group of recipients, e.g. a predetermined distribution list stored on said server 105.

Said server 105 may be optionally adapted to determine said time of validity of said virtual mark. In this case said server 105 is adapted to delete the virtual mark after the time of validity is passed.

Said smart phone 102 and said server 105 may be optionally adapted to allow deletion of said mark by the creator of the mark at any time, independent from the position of the smart phone 102 that was used to create said mark. For example said identifier of said attributes is a unique identifier of said smart phone 102 or a user of said smart phone 102. In this case said smart phone 102 is adapted to send a deletion request including the identifier of said smart phone 102 or said user of said smart phone 102 to said server 105. Furhtermore said server 105 is adapted to delete said mark if said identifier received in said deletion request matches said identifier from said attribute of said mark.

Afterwards a step 301 is executed.

In said step 301 said information about said virtual mark is stored. Said step 301 is optional.

Afterwards a step 302 is executed.

In said step 302 the position of said recipient is determined. Said position is for example determined by look up in a data base tracking recipients. For example said recipient's address matches the address of said second device, e.g. said second smart phone 106. In this case the current position of said smart phone 106 is determined, for example as GPS coordinates or mobile network-based triangulation systems.

Afterwards a step 303 is executed.

In said step 303 a test is performed to determine whether said recipient, i.e. said second smart phone 106, is within a predetermined distance from said position of said virtual mark. To that end, for example GPS position coordinates are compared and said predetermined distance is a circle of 10 meters. In case said recipient is within said predetermined distance, a step 304 is executed. Otherwise said step 302 is executed.

Optionally a time out condition is monitored to end said second method in case said recipient is not within said predetermined distance after a predetermined period of time, e.g. 1 day.

In said step 304 said information about said virtual mark is sent to said recipient, i.e. said second device, for example said second smart phone 106.

Sending of said mark to said recipient may be done via said server 105 directly or after authorization of the sending by said server 105, via an Augmented Reality system, e.g. another server dedicated to provide Augmented Reality information to recipients. In this case the information required to identify said recipient and to describe said mark are for example forwarded from said server 105 to said other server executing said Augmented Reality system.

Afterwards said second method ends.

Goal of a third method is to allow a modification of an existing virtual mark. Said third method is the same as said first method except for the start condition and steps 200 and 202. Said third method may be executed on any of said devices, e.g. said first smart phone 102 or said second smart phone 106.

Below said third method is described referencing said first smart phone 102.

According to said third method, the starting condition before said step 200 is instead of displaying said physical environment reception of information about said mark by said first smart phone 102. This would be the case for example if said server 105 sends information about said virtual mark to said first smart phone 102 when said first smart phone 102 is close enough to said physical environment, e.g. said wall 101.

In this case said first smart phone 102 displays said virtual mark on said display, for example when said camera of said smart phone 102 when said physical environment is viewed through said camera, e.g. said wall 101, having been virtually marked.

Afterwards said step 201 is executed as described above for said first method.

Said step 202 is modified to allow modification of said virtual mark.

Afterwards steps 203 to 206 are executed as described above.

In an optional modification to said second method, said modification of said virtual mark is allowed only in case the original creator of said virtual mark set the attribute to write access. The write access may be general write access or write access per recipient.

To that end said server 105 and said devices, e.g. said first smart phone 102 or said second smart phone 106 are adapted to exchanges messages requesting and granting authorization. For example said second smart phone 106 is adapted to send information about a modified mark in a message Request to said server 105, requesting to store said modified mark instead of the original mark, i.e. requesting write access to said mark. For example said server 105 is adapted to determine from said attributes if the address of said second smart phone 106 is in the list of recipients having write permission in said attributes. Furthermore said server 105 in this example is adapted to grant write access, i.e. to store the modified version of said mark only if write permission is given in said attribute.

This access control may be included in said smart phones 102, 106 instead or additionally.

In the aforementioned example information about said mark is transferred. Alternatively or additionally to transferring information about said mark, said mark itself or an image of said physical environment 101 and said mark may be transferred.

Computer programs resembling abovementioned methods and computer program products storing such computer programs may be used to provide the functionality.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for virtually marking a physical environment (101), **wherein** a mark for said physical environment (101) is determined from movement of a device (102) relative to a predetermined position of said physical environment (101), wherein a position for displaying said mark in said image of said physical environment (101) is determined from information about said predetermined position of said physical environment (101) and wherein said mark and said image of said physical environment (101) are displayed together.

2. The method according to claim 1, wherein said position of said physical environment (101) is determined depending on a position of said device (102) and an image captured by said device (102) at said position of said device (102).

3. The method according to claim 2, wherein a position of said mark on said physical environment (101) is determined depending on said position of said physical environment (101) and said movement of said device (102).

4. The method according to claim 1, wherein an already completed part of said mark is displayed on a display of said device (102) while determining said mark.

5. The method according to claim 1, wherein an attribute, in particular specifying read or write access or a digital signature, is assigned to said mark.

6. The method according to claim 1, wherein information about said mark is sent from a first device (102), in particular to a second device (106), in particular via a server (105) of said telecommunications network.

7. The method according to claim 1, wherein a modification to said mark is determined from movement of said device (102).

8. The method according to claim 1, wherein a modification to a mark determined from movement of a first device (102) is determined from movement of a second device (106).

9. A system for virtually marking a physical environment (101), **wherein** a first device (102) is adapted to determine a mark for a physical environment (101) from movement of said first device (102) relative to a predetermined position of said physical environment (101), and to determine a position for displaying said mark in said image of said physical environment (101) from information about said predetermined position of said physical environment (101), a server (105) is adapted to grant access rights to information about said mark depending on an attribute, in particular specifying read or write access or a digital signature, assigned to said information about said mark and wherein said first device (102) or a second device (106) are adapted to display said mark and said physical environment (101) together.

10. The system according to claim 9, wherein said first device (102) is adapted to send said information about said mark and said second device (106) is adapted to receive said information about said mark.

11. The system according to claim 9, wherein said second device (106) is adapted to determine a modification to said mark from movement of said second device (106).

12. A device (102) for virtually marking a physical environment (101), **adapted to** determine a mark for a physical environment (101) from movement of said first device (102) relative to a predetermined position of said physical environment (101), and to determine a position for displaying said mark in said image of said physical environment (101) from information about said predetermined position of said physical environment (101).

13. The device (102) according to claim 12, adapted to determine an attribute, in particular specifying read or write access or a digital signature, assigned to said mark.

14. A computer program for virtually marking a physical environment (101), **wherein** said computer program, when executed on a computer, causes the computer to determine a mark for a physical environment (101) from movement of a device (102) relative to a predetermined position of said physical environment (101), and to determine a position for displaying said mark in said image of said physical environment (101) from information about said predetermined position of said physical environment (101).

15. A computer program product for virtually marking a physical environment (101) comprising a computer usable medium having a computer readable program, **wherein** said computer readable program, when executed on a computer, causes the computer to determine a mark for a physical environment (101) from movement of a device (102) relative to a predetermined position of said physical environment (101), and to determine a position for displaying said mark in said image of said physical environment (101) from information about said predetermined position of said physical environment (101).
